## Europäisches Patentamt
## European Patent Office
## Office européen des brevets

(19)

(11) Numéro de publication: **0 021 875**
A2

(12)

# DEMANDE DE BREVET EUROPEEN

(21) Numéro de dépôt: 80400706.0

(22) Date de dépôt: 21.05.80

(51) Int. Cl.³: **F 23 G 7/00**
F 23 N 1/02, F 23 N 5/00
F 23 G 5/00, B 22 C 5/08
//C22B1/00

(30) Priorité: 07.06.79 FR 7914596

(43) Date de publication de la demande:
07.01.81 Bulletin 81/1

(84) Etats Contractants Désignés:
DE FR GB IT

(71) Demandeur: **S.A. FONDERIES GAILLY Société Anonyme Française**
**1, rue de l'Abreuvoir**
**F-08000 Charleville-Mezieres(FR)**

(72) Inventeur: **Gailly, Christian**
**81, Chemin Vert du Blénois**
**F-45130 Meung sur Loire(FR)**

(74) Mandataire: **Bouju, André**
**38 Avenue de la Grande Armée**
**F-75017 Paris(FR)**

(54) **Procédé pour éliminer une matière combustible enrobant des fragments solides et dispositif pour sa mise en oeuvre.**

(57) Procédé pour éliminer une matière combustible enrobant des fragments solides, telle que l'huile de coupe enrobant des copeaux d'usinage, en récupérant son énergie thermique, et dispositif pour sa mise en oeuvre.

Par une vis sans fin 3, on fait tomber les copeaux dans le prolongement de la flamme d'un brûleur 6, pour enflammer l'huile. Après séparation dans un cyclône 8, les fumées sont évacuées par la cheminée 9, et les copeaux préchauffés sont récupérés pour la fusion. La combustion est oxydante en tous points. La température des fumées est maintenue constante en ajustant à tout moment les débits d'air et de gaz pour tenir compte des variations de débit des copeaux et des teneurs en matières combustibles et incombustibles. La régulation est organisée pour économiser au maximum le combustible d'appoint.

Application au déshuilage des copeaux enrobés d'huile de coupe en vue de leur fusion, à la regénération du sable de fonderie et à l'incinération des boues industrielles.

FIG.1

EP 0 021 875 A2

Croydon Printing Company Ltd.

1

La présente invention concerne un procédé pour éliminer une matière combustible enrobant des fragments solides, telle que l'huile de coupe enrobant des copeaux d'usinage, en récupérant son énergie thermique. Elle concerne également un dispositif pour la mise en oeuvre de ce procédé.

L'opération précitée présente un intérêt évident dans de nombreux domaines toutes les fois qu'il s'agit de débarrasser un corps solide fragmenté d'une matière indésirable qui l'enrobe ou l'imprègne. Ce problème se pose, en particulier, dans le cas des copeaux métalliques sous-produits d'usinage, et notamment des copeaux de fonte, qui sont réutilisables par fusion dans d'excellentes conditions économiques.

Or, ces copeaux sont, en raison de leur provenance, imprégnés d'huile de coupe, c'est-à-dire d'un mélange d'eau et d'huile, la masse d'huile se situant entre 0 et 5 % (en moyenne 1,5 %) de la masse des copeaux. L'utilisation directe de ces copeaux dans une charge de four, soit en vrac, soit plus souvent en briquettes, se trouve limitée, en général, à 15 % de la charge par la présence d'huile, en raison de la pollution atmosphérique provoquée par le dégagement de fumées noires d'hydrocarbures imbrûlés, et d'une pollution concomitante du métal.

Ainsi, non seulement l'énergie thermique potentielle contenue dans l'huile, qui peut atteindre 500 kwh par tonne de copeaux, n'est pas utilisée, mais elle constitue même un obstacle à la fusion des copeaux.

On a tenté de faire subir aux copeaux un prétraitement dans des fours rotatifs où l'huile est brûlée. On peut alors utiliser ces copeaux dans des proportions beaucoup plus grandes, pouvant atteindre 100 % de la charge, si l'on est sûr de leur composition chimique. Mais l'énergie contenue dans l'huile n'est pas récupérée. Il faut, au contraire, dépenser de l'énergie pour éliminer l'huile. Le problème de la pollution atmosphérique est mal résolu.

On a alors mis au point divers procédés plus rationnels et plus économiques, tel que celui décrit dans la demande de brevet français N° 76 14403, où l'on projette les copeaux axialement dans la flamme d'un brûleur à gaz, en ménageant un rapport air/gaz tel que la combustion globale du gaz et de l'huile soit réductrice, dans le but, notamment, d'éviter l'oxydation des copeaux.

Ce procédé donne satisfaction en général mais, dans une certaine mesure, manque de souplesse et de stabilité en ce sens que la combustion réductrice donne une température relativement élevée pour la flamme et les gaz de combustion finaux. Cette température ne peut pratiquement pas être abaissée au-dessous de 1 100° C, température juste inférieure à la température de fusion des copeaux fins. Or, si, accidentellement, le débit d'air augmente si peu que ce soit, la température s'élève instantanément et entraîne la fusion des copeaux fins de faible capacité thermique, leur agglomération et leur fixation sur les parois de l'appareillage.

Un premier but de la présente invention est de réaliser un procédé permettant d'effectuer l'opération d'élimination précitée sans aucun risque de voir fondre les copeaux les plus fins.

Un autre but de l'invention est de réaliser un dispositif permettant d'obtenir ce même résultat, en particulier, par l'application du procédé précité.

Suivant un premier aspect de l'invention, le procédé pour éliminer une matière combustible enrobant des fragments solides, telle que l'huile de coupe enrobant des copeaux d'usinage, en récupérant son énergie thermique, consiste à mettre ces fragments en contact pendant une durée prédéterminée, de l'ordre d'une seconde, avec un fluide gazeux constitué d'un combustible d'appoint brûlé avec un comburant.Il est caractérisé en ce qu'on règle les teneurs respectives en combustible d'appoint et en comburant de manière que les produits finaux de combustion soient oxydants et que leur température soit maintenue à une valeur prédéterminée.

Dans le cas de copeaux d'usinage enrobés d'huile de coupe, par exemple, peuvent varier d'une façon importante et brutale le débit de copeaux en volume ou en poids ainsi que leur teneur en huile et en eau.

Dans cette atmosphère constamment oxydante, on a constaté, de façon surprenante et inattendue, que les copeaux métalliques n'étaient pas oxydés, du moins pas de façon décelable. On a même constaté que la rouille qui peut les enrober initialement est dissociée, et qu'il ne subsiste au plus à leur surface que de l'oxyde de fer anhydre. La disparition de l'eau d'hydratation constitue un avantage important, car cette eau, introduite dans le métal liquide, peut non seulement provoquer des accidents mais encore, en libérant de l'hydrogène et de l'oxygène naissants , altérer la qualité du métal.

La température des produits de combustion finaux est déterminée de telle façon qu'elle soit nettement en deçà de la température de fusion des copeaux pour éviter leur agglomération. Cette température dépend donc de la composition chimique des copeaux qui fait varier leur point de fusion, mais aussi de leurs dimensions minimales et de leur teneur en poussières.

Dans le cas de copeaux de fonte, il a été constaté que cette température pouvait avantageusement être fixée entre 900° C et 950° C suivant la nature des copeaux.

La combustion de l'huile est quasi-instantanée, sans risque d'agglomération des copeaux fins.

Suivant une réalisation préférée de l'invention, pour maintenir constante la température des produits de combustion, si cette température tend à s'élever, on diminue en priorité le débit de combustible d'appoint jusqu'à un minimum technique prédéterminé, ensuite de quoi l'on augmente le débit d'air.

Cette façon de procéder permet d'économiser au maximum le combustible d'appoint. Toutefois, il est impossible de descendre au-dessous d'un débit minimal correspondant à la limite de stabilité de la flamme du brûleur où l'on effectue la combustion.

De façon analogue, si la température tend à baisser, on diminue en priorité le débit d'air jusqu'à un minimum technique prédéterminé, ensuite de quoi l'on augmente le débit de combustible.

La mise en contact des copeaux avec le fluide gazeux s'effectue avantageusement par projection transversale des copeaux dans le courant de fluide, à une certaine distance de l'extrémité de la flamme, dans le but d'éviter un effet de chalumeau qui provoquerait l'agglomération des copeaux.

Suivant un second aspect de l'invention, le dispositif pour éliminer une matière combustible enrobant des fragments solides, telle que l'huile de coupe de copeaux d'usinage ou les résidus d'additifs du sable de fonderie usagé, comprend des moyens pour mettre ces fragments en contact pendant une durée prédéterminée, de l'ordre d'une seconde, avec un fluide gazeux constitué d'un combustible d'appoint brûlé avec un comburant. Il est notamment, à appliquer un procédé tel que celui décrit plus haut. Ce dispositif comprend un brûleur pour réaliser la combustion du combustible d'appoint dans l'air en vue de produire un fluide gazeux à une température prédéterminée, et il est caractérisé en ce qu'il comprend un étage de régulation relié à une sonde placée pour mesurer la température des produits finaux de la combustion, cet étage de régulation étant relié en sortie à des moyens de réglage du débit de combustible d'appoint et à des moyens de réglage du débit d'air pour commander les deux moyens de réglage précités en séquence, de manière à faire d'abord diminuer le débit de gaz puis augmenter le débit d'air si la température s'élève, ou à faire d'abord diminuer le débit d'air puis augmenter le débit de gaz si la température baisse.

Cette disposition nécessite pratiquement d'utiliser un brûleur où le débit de combustible peut être réglé à une valeur très faible, de l'ordre de 6 % du débit nominal, et pouvant fonctionner sous un excès d'air très large, de l'ordre de 1.500 % .

La sonde de température est avantageusement située dans la cheminée d'évacuation des produits de la combustion, afin qu'elle soit en dehors du trajet des copeaux.

Suivant une réalisation préférée de l'invention, le brûleur est placé avec son axe horizontal, et des moyens de manutention des copeaux sont disposés de manière à faire tomber les fragments métalliques transversalement à l'axe du brûleur, à une distance de celui-ci au moins égale à la longueur de la flamme.

Cette disposition laisse les copeaux à l'abri de la partie chaude de la flamme qui risquerait de provoquer leur fusion.

D'autres particularités et avantages de l'invention ressortiront encore de la description détaillée qui va suivre.

Aux dessins annexés, donnés à titre d'exemple non limitatif :

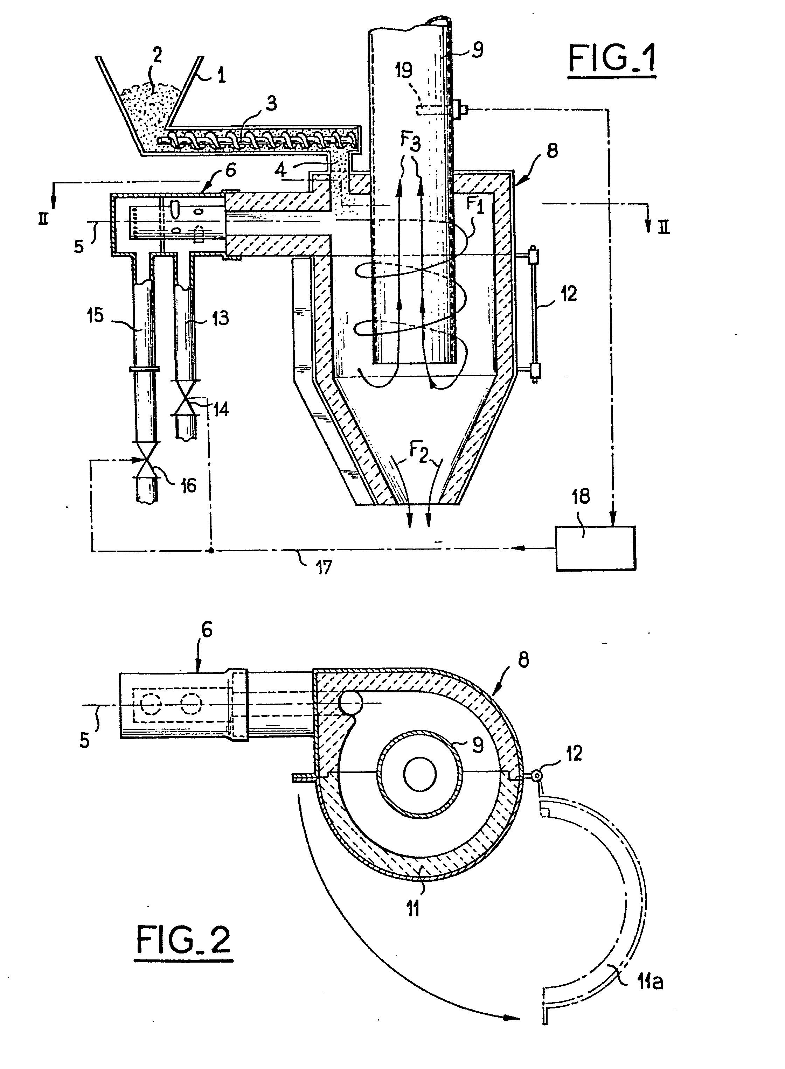

- la Figure 1 est une vue en coupe longitudinale, partiellement schématique, d'un dispositif conforme à l'invention,

- la Figure 2 est une vue en coupe suivant II-II de la Figure 1.

En référence à ces Figures, le dispositif conforme à l'invention comprend une trémie 1 destinée à recevoir une réserve 2 de copeaux métalliques et reliée à sa base à un dispositif d'avance à vis sans fin 3 aboutissant au-dessus d'un canal 4 sensiblement vertical.

Le canal 4 débouche au-dessus de l'axe 5 sensiblement horizontal d'un brûleur à gaz 6. Le brûleur doit répondre à certaines spécifications qui seront précisées plus loin. Le brûleur 6 est décalé axialement dans une position telle que le canal 4 débouche au-delà de l'extrémité de sa flamme.

Le brûleur 6 est relié par un carneau 7 à un cyclône 8 dans lequel ce carneau débouche tangentiellement. Le cyclône 8, ainsi que le carneau 7, est réalisé en matériau réfractaire, recouvert extérieurement d'une couche d'isolant thermique, suivant des dispositions en elles-mêmes connues.

Le cyclône 8 comporte une cheminée axiale d'évacuation des produits gazeux de la combustion et sa partie inférieure est composée de deux moitiés séparées par un plan sensiblement diamétral. L'une de ces moitiés 11 est mobile autour d'une articulation 12, de manière à pouvoir venir en 11a, et à permettre une inspection et un nettoyage de l'intérieur du cyclône ainsi que son regarnissage éventuel en réfractaire.

Le brûleur 6 est alimenté en air comburant par une tuyauterie 13 comportant une vanne de réglage automatique 14, et en gaz par une tuyauterie 15 comportant une vanne de réglage automatique 16.

Ces vannes sont munies de servo-moteurs respectifs attaqués par un signal 17 émis par un étage de régulation 18 recevant un signal "mesure" d'une sonde de température 19 placée dans la cheminée 9 pour mesurer la température des produits de combustion finaux à leur évacuation à l'atmosphère.

Les servo-moteurs précités sont asservis de façon connue, dite "en séquence", pour être actionnés par le signal 17 de la façon suivante :

- quand la température mesurée par la sonde tend à s'élever, le signal 17 provoque en priorité la fermeture progressive de la vanne de gaz 16, sans actionner la vanne d'air 14, et ce jusqu'à ce que le débit de gaz ait atteint une valeur minimale limite au-dessous de laquelle le brûleur 6 ne fonctionnerait plus convenablement ;

- si alors la température tend encore à s'élever, le signal 17 provoque l'ouverture progressive de la vanne d'air 14, la vanne 16 restant immobile dans sa position de débit minimal ;

- si au contraire la température mesurée tend à baisser, le signal 17 provoque en priorité la fermeture progressive de la vanne d'air 14, la vanne de gaz 16 restant immobile, et ce jusqu'à ce que le débit d'air atteigne une valeur minimale limite au-dessous de laquelle le brûleur 6 ne fonctionnerait plus convenablement ;

- si alors la température tend encore à baisser, le signal 17 provoque l'ouverture progressive de la vanne de gaz 16, la vanne d'air 14 restant immobile dans sa position de débit minimal.

En fonction de ces prescriptions de fonctionnement, la réalisation de l'étage de régulation 18 et de l'asservissement des servo-moteurs est à la portée de l'homme de l'art.

On va maintenant expliquer le fonctionnement du dispositif décrit. Cette explication servira de description du procédé objet de l'invention.

On commence par charger la trémie 1 d'une certaine quantité de copeaux métalliques, sous-produits récupérés après usinage et plus ou moins imprégnés d'huile de coupe de façon en général peu homogène.

Cette huile de coupe contient, d'ailleurs, une proportion variable d'huile proprement dite et d'eau.

On allume ensuite le brûleur 6, les débits de gaz et d'air étant réglés au minimum de telle façon que les gaz de combustion soient à une température voisine de la valeur de consigne imposée à l'étage 18.

On met alors en service le dispositif d'avance à vis sans fin 3, de sorte que les copeaux tombent verticalement par le canal 4, transversalement à la direction de la flamme du brûleur 6, mais au-delà de cette dernière, de façon à ne pas subir un effet de chalumeau qui risquerait de provoquer, sinon la fusion, au moins l'agglomération des copeaux les plus fins.

Dans l'exemple décrit, où l'on utilise du gaz naturel, dont le pouvoir comburivore est d'environ 10 $Nm^3/Nm^3$ , on règle le débit de gaz au minimum choisi de 12 $Nm^3/h$, et le débit d'air au minimum choisi de 350 $Nm^3/h$, ce qui correspond à un excès d'air d'environ 200 % , et ce qui donne, après quelques minutes nécessaires à la mise en équilibre thermique de l'enceinte, une température à la sonde 19 voisine de celle imposée comme consigne à l'étage 18, soit environ 950° C.

Ces valeurs ont été retenues pour un appareil capable de traiter en débit instantané 3 t/h de copeaux et de les porter à une température moyenne comprise entre 700° C et 800° C suivant la nature des copeaux.

L'huile se vaporise et s'enflamme instantanément dès que les copeaux traversent la veine de fluide gazeux, dans laquelle ils sont immédiatement dispersés et la combustion totale de l'huile est pratiquement instantanée.

On constate de façon surprenante et inattendue que l'échange de chaleur entre le fluide gazeux et les copeaux est très intense, ce qui permet d'atteindre un des buts de l'invention qui est de récupérer l'énergie de l'huile pour préchauffer les copeaux avant fusion dans un four.

En fonction des indications de la sonde 19, les débits d'air et de gaz se règlent automatiquement, comme il a été indiqué précédemment.

Avec ce système, la vanne de gaz est presque toujours au minimum. Elle ne s'ouvre que dans le cas, assez rare, où la teneur en huile des copeaux est particulièrement faible ou si la teneur en eau est particulièrement élevée.

Dans la majorité des cas, la vanne de gaz reste au minimum et l'étage 18 commande l'ouverture de la vanne d'air 14 si le débit de copeaux ou la teneur en huile augmente et sa fermeture dans le cas contraire. La température des produits de combustion contrôlée par la sonde 19, reste remarquablement régulière au niveau qui lui a été imposé par la consigne de l'étage 18.

Après un parcours en hélice dans la partie cylindrique (F1) du cyclône, les copeaux freinés tombent sur la partie conique vers le trou de sortie inférieur (F2), tandis que les fumées s'échappent vers la cheminée (F3). A la fin du contact, les copeaux les plus gros sont à une température inférieure d'environ 200° C à celle des gaz.

On constate que des copeaux introduits non oxydés dans l'appareil en ressortent sans présenter aucune trace d'oxyde. Quant à ceux qui étaient au moins partiellement recouverts de rouille, ils ne sont plus, en sortant, recouverts que d'oxyde anhydre, l'eau d'hydratation ayant disparu.

Ce résultat, a priori surprenant et inattendu, ne semble pouvoir êtreexpliqué, dans une certaine mesure, que par la faible durée de contact du métal avec le gaz oxydant.

Or, il s'agit là d'un résultat très important et bénéfique. On sait, en effet, que l'introduction dans un four de fusion de ferrailles rouillées, même sèches, provoque, par déshydratation brutale de la rouille, un dangereux dégagement de vapeur. En outre, dans les conditions où elle apparaît, cette vapeur libère de l'hydrogène et de l'oxygène naissants nuisibles au bain de métal.

Il résulte de ce qui précède que le brûleur 6 doit présenter une parfaite stabilité de fonctionnement dans une très large plage d'excès d'air et pouvoir développer une puissance thermique de l'ordre de 1 500 à 2 000 kw , pour l'exemple décrit. De tels brûleurs peuvent, par exemple, être du genre de celui décrit dans la demande de brevet français N° 77 02749, au nom de GAZ DE FRANCE.

Bien entendu, l'invention ne se limite pas aux exemples décrits. Ainsi, le procédé peut s'appliquer à tous fragments métalliques autres que des copeaux, en vue d'éliminer toute matière combustible. Le combustible d'appoint utilisé peut également être quelconque, pourvu que soient respectées les caractéristiques de la combustion. Quant au dispositif, il peut faire l'objet de nombreuses variantes. Notamment, la vis sans fin 3 et le cyclône 8 peuvent être désolidarisés et une injection d'air peut être faite dans le conduit 4 pour empêcher une sortie des gaz du cyclône par ce conduit, sortie qui défavorise l'introduction des copeaux.

On peut aussi prévoir, au lieu d'ouvrir le cyclône comme il a été indiqué, de déplacer latéralement l'une de ses moitiés ainsi que la cheminée au moyen de chariots roulant sur des fers parallèles horizontaux.

On a d'autre part trouvé, et vérifié par des essais, que ce dispositif pouvait servir, sans modifications, à la regénération du sable de fonderie usagé, en provoquant la combustion des résidus d'additifs qu'il contient. Ce dispositif permet notamment la mise en oeuvre d'un procédé de regénération tel que celui décrit dans le brevet français N° 76 14403.

On a également trouvé que ce dispositif pourrait servir, toujours sans modifications, à la destruction des boues, ce qui se révèle particulièrement avantageux lorsque ces boues ont un pouvoir calorifique notable les rendant sensiblement autocombustibles, ce qui est notamment le cas de nombreuses boues industrielles.

La composition chimique et donc le pouvoir calorifuge de ces boues peuvent varier de façon très rapide. Le dispositif est le même que celui décrit précédemment. Seul le revêtement réfractaire du cyclône doit être adapté à chaque cas particulier.

12

## REVENDICATIONS

1. Procédé pour éliminer une matière combustible enrobant des fragments solides, telle que l'huile de coupe enrobant des copeaux d'usinage, en récupérant son énergie thermique, consistant à mettre ces fragments en contact pendant une durée prédéterminée, de l'ordre d'une seconde, avec un fluide gazeux constitué d'un combustible d'appoint brûlé avec un comburant, caractérisé en ce qu'on règle les teneurs respectives en combustible d'appoint et en comburant de manière que les produits finaux de combustion soient oxydants et que leur température soit maintenue à une valeur prédéterminée.

2. Procédé conforme à la revendication 1, caractérisé en ce qu'on détermine la température précitée en fonction de la matière traitée.

3. Procédé conforme à la revendication 2, appliqué à l'élimination de l'huile de coupe enrobant des copeaux de fonte , caractérisé en ce que la température précitée est comprise entre 900° C et 950° C.

4. Procédé conforme à l'une des revendications 1 à 3, caractérisé en ce que, pour maintenir constante la température des produits de combustion si cette température tend à s'élever, on diminue en priorité le débit de combustible d'appoint jusqu'à un minimum technique prédéterminé, ensuite de quoi l'on augmente le débit d'air.

5. Procédé conforme à l'une des revendications 1 à 4, caractérisé en ce que, pour maintenir constante la température des produits de combustion si cette température tend à baisser, on diminue en priorité le débit d'air jusqu'à un minimum technique prédéterminé, ensuite de quoi l'on augmente le débit de combustible.

6. Procédé conforme à l'une des revendications 1 à 5, caractérisé en ce que l'on projette les fragments métalliques transversalement à la direction de la flamme, au-delà de l'extrémité de celle-ci.

7. Dispositif pour éliminer une matière combustible enrobant des fragments solides, telle que l'huile de coupe de copeaux d'usinage ou les résidus d'additifs du sable de fonderie usagé, comprenant des moyens pour mettre ces fragments en contact pendant une durée prédéterminée, de l'ordre d'une seconde, avec un fluide gazeux brûlé avec un comburant, et notamment, pour appliquer un procédé conforme à l'une des revendications 1 à 6, ce dispositif comprenant un brûleur (6) pour réaliser la combustion d'un combustible d'appoint dans l'air en vue de produire un fluide gazeux à une température prédéterminée, caractérisé en ce qu'il comprend un étage de régulation (18) relié à une sonde (19) placée pour mesurer la température des produits finaux de la combustion, cet étage de régulation étant relié en sortie à des moyens de réglage (16) du débit de combustible d'appoint et à des moyens de réglage (14) du débit d'air pour commander les deux moyens de réglage précités en séquence, de manière à faire d'abord diminuer le débit de gaz puis augmenter le débit d'air si la température s'élève, ou à faire d'abord diminuer le débit d'air puis augmenter le débit de gaz si la température baisse.

8. Dispositif conforme à la revendication 7, caractérisé en ce que la sonde de température (19) est située dans la cheminée (9) d'évacuation des produits de combustion.

9. Dispositif conforme à l'une des revendications 7 ou 8, caractérisé en ce que le brûleur (6) est monté avec son axe (5) horizontal, et en ce que des moyens (3) de manutention des fragments sont disposés de manière à faire tomber les fragments solides transversalement à l'axe (5) du brûleur (6), à une distance de celui-ci au moins égale à la longueur de la flamme.

0021875

1/1

FIG_1

FIG_2